# EUROPÄISCHE PATENTSCHRIFT

(11) **EP 1 659 387 B1**
(45) Veröffentlichungstag und Bekanntmachung des Hinweises auf die Patenterteilung: **10.10.2012**
(21) Anmeldenummer: 04027725.3
(22) Anmeldetag: 23.11.2004
(51) Int. Cl.: G01M 11/00

(54) **Vorrichtung und Verfahren zur chromatischen Dispersionsmessung**
Device for and method of measuring the chromatic dispersion
Dispositif et procédé de mesure de la dispersion chromatique

(43) Veröffentlichungstag der Anmeldung: 24.05.2006
(73) Patentinhaber: Acterna Germany GmbH, 72800 Eningen (DE)
(72) Erfinder: Löcklin, Eberhard, Dr., 72766 Reutlingen (DE)
(74) Vertreter: Kohler Schmid Möbus

(56) Entgegenhaltungen:
- EP-A- 1 233 256
- EP-A- 1 278 081
- EP-A- 1 351 042
- US-A1- 2001 050 767
- PATENT ABSTRACTS OF JAPAN Bd. 005, Nr. 175 (P-088), 11. November 1981 (1981-11-11) -& JP 56 103343 A (NIPPON TELEGR & TELEPH CORP <NTT>), 18. August 1981 (1981-08-18)

## Beschreibung

Die Erfindung betrifft ein Verfahren und eine Vorrichtung zum Messen der chromatischen Dispersion einer optischen Übertragungsstrecke.

Ein derartiges Verfahren und eine derartige Vorrichtung sind beispielsweise durch die EP-A-1 233 256 JP 56103343, US 2001/050767 und EP1278081 bekannt geworden.

Die chromatische Dispersion führt dazu, dass Licht verschiedener Wellenlängen eine optische Übertragungsstrecke, insbesondere eine Glasfaser, unterschiedlich schnell durchläuft. Wird daher Licht mit breitem optischen Spektrum in der Amplitude moduliert und nach Durchlaufen der Glasfaserstrecke in einzelnen Teilspektren detektiert, so hat das Modulationssignal in jedem der einzelnen Teilspektren eine etwas andere Phasenlage. Aus der Differenz der Wellenlängen und der Phasen der einzelnen Teilspektren kann die Größe der chromatischen Dispersion bestimmt werden.

Die meisten verwendeten Messverfahren ("Modulation Phase-Shift Method", "Differential Phase-Shift Method") beruhen auf der klassischen Nyquist-Methode zur Gruppenlaufzeitmessung. Das optische Trägersignal wird mit einer Frequenz ω amplitudenmoduliert, die klein ist im Vergleich zur Trägerfrequenz. Im 1550 nm-Bereich liegen die optischen Frequenzen bei rund 200 THz, so dass diese Forderung für Modulationsfrequenzen bis in den hohen GHz-Bereich erfüllt ist. Die Modulationsfrequenz wird am Ende der Prüfung durch Demodulation zurückgewonnen und ihre Phasenlage mit derjenigen der Modulationsquelle verglichen.

Als Maß für die Laufzeit einer Signalkomponente wird die Gruppenlaufzeit t_{g} verwendet, die sich nach Nyquist zu t_{g} = Δβ/ω berechnet. Als chromatischen Dispersionskoeffizienten D bezeichnet man die Ableitung der Gruppenlaufzeit t_{g} nach der Wellenlänge λ bezogen auf die Länge L der Faser: D = 1/L *dt_{g}/dλ. Zur Bestimmung der chromatischen Dispersion ist bei diesem Messverfahren die Gruppenlaufzeitbestimmung in Abhängigkeit von der Wellenlänge durchzuführen und dann die Ableitung der Gruppenlaufzeit nach der Wellenlänge zu berechnen.

Bei dem aus der EP-A-1 233 256 bekannten Verfahren wird aus dem Licht, das die optische Übertragungsstrecke durchlaufen hat, ein Spektrum als Referenzsignal durch einen ersten Filter und als Messsignal durch einen kontinuierlich abstimmbaren zweiten Filter ausgesondert. Aus der Änderung der Phasendifferenz bei verschiedenen optischen Frequenzen, die über den abstimmbaren optischen Filter eingestellt werden, kann wie oben beschrieben die chromatische Dispersion bestimmt werden.

In der Praxis wird oft nur mit wenigen diskreten Wellenlängen gearbeitet, sodass auch nur eine näherungsweise Bestimmung der chromatischen Dispersion erfolgt. Die benötigte Zahl und der Abstand der Messwellenlängen hängen vom Prüfling ab. Für Glasfasern genügen relativ grobe Wellenlängenschritte von ca. 5 oder 10 nm. Für schmalbandige Prüflinge, wie z.B. Dispersionskompensatoren mit Chirped Fiber Bragg Gratings, ist eine geringere Schrittweite erforderlich (z.B. 0,5 nm).

Der vorliegenden Erfindung liegt die Aufgabe zugrunde, ein Verfahren und eine Vorrichtung der eingangs genannten Art dahingehend weiterzubilden, dass das Messen der chromatischen Dispersion mit einer vereinfachten optischen Anordnung durchgeführt werden kann.

Diese Aufgabe wird gelöst durch ein Verfahren nach Anspruch 1.

Beim erfindungsgemäßen Verfahren zur Messung der chromatischen Dispersion kann auf die Verwendung eines durchstimmbaren Filters verzichtet werden, sodass der Aufbau einer Messanordnung zur Durchführung des Verfahrens sich vereinfacht, da auf bewegliche Teile verzichtet werden kann. Die dispergierende abbildende optische Einrichtung, z.B. ein abbildendes Gitter, erzeugt eine räumliche Spektralzerlegung des übertragenen optischen Signals in Abhängigkeit von der Wellenlänge. Jeder der Photodetektoren detektiert daher ein Teilspektrum des übertragenen Signals einer definierten Wellenlänge.

In einer bevorzugten Variante des Verfahrens ist einer der Photodetektoren als Referenzdetektor fest mit einer Phasenmesseinrichtung der Auswerteschaltung verbunden, und zur Bestimmung einer Phasendifferenz wird jeweils ein weiterer Photodetektor mit der Phasenmesseinrichtung verbunden. Die Durchführung des Verfahrens kann in diesem Fall analog zur EP-A-1 233 256 durchgeführt werden, wobei der fest mit der Phasenmessvorrichtung verbundene Photodetektor als Referenzpfad und die weiteren Photodetektoren als Messpfade vorgegebener Wellenlänge dienen.

In einer weiteren vorteilhaften Variante wird zur Bestimmung einer Phasendifferenz jeweils ein erster und ein zweiter der Photodetektoren der Photodetektoranordnung mit einer Phasenmesseinrichtung der Auswerteschaltung verbunden. In diesem Fall kann anstelle der Phasenmessung zwischen einem Referenzdetektor und einem weiteren Photodetektor die Phasenmessung zwischen zwei beliebigen Photodetektoren der Photodetektoranordnung erfolgen.

In dem Verfahren nach Anspruch 1 sind alle Photodetektoren fest mit einem Multiplexer verbunden und die Signale der Photodetektoren werden mit einer vorgebbaren Abtastfrequenz ausgelesen. Dieses Verfahren ist insbesondere bei Verwendung einer Vielzahl von Photodetektoren vorteilhaft einsetzbar.

In einer Weiterbildung dieses Verfahrens wird die Abtastfrequenz des Multiplexers phasenstarr an die Modulationsfrequenz des detektierten Signals eines als Referenzdetektor dienenden Photodetektors der Photodetektoranordnung gekoppelt. Hierdurch wird eine besonders einfache Bestimmung der chromatischen Dispersion ermöglicht, da die von den Photodetektoren detektierten Signale zeitlich konstant sind.

In einer alternativen Weiterbildung unterscheiden sich die Abtastfrequenz und die Modulationsfrequenz geringfügig. Bei dieser Weiterbildung ist das detektierte Signal an einem Photodetektor nicht zeitlich konstant, sodass sowohl ein Maximum als auch ein Minimum des übertragenen Signals an jedem der Photodetektoren ankommt, wodurch eine Skaleneichung durchgeführt werden kann.

Bei einer besonders bevorzugten Variante des Verfahrens wird zur Kalibrierung die optische Leistung der detektierten Signale der Photodetektoren der Photodetektoranordnung über eine im Verhältnis zur Periodendauer der Modulationsfrequenz lange Dauer gemessen und daraus ein Mittelwert der optischen Leistung ermittelt. Alle weiteren Messungen können auf diesen Mittelwert bezogen werden.

Die Aufgabe wird auch gelöst durch eine Vorrichtung nach Anspruch 5 zum Messen der chromatischen Dispersion einer optischen Übertragungsstrecke, vorzugsweise eines Lichtwellenleiters, insbesondere zur Durchführung des oben beschriebenen Verfahrens. Die Vorrichtung ist robust und kann in einer Bauform geringer Größe, z.B. in einem Handheld, realisiert werden.

In einer bevorzugten Ausführungsform ist eine Phasenmesseinrichtung der Auswerteschaltung fest mit einem als Referenzdetektor dienenden Photodetektor verbunden und ist mit den weiteren Photodetektoren der Photodetektoranordnung über einen Multiplexer zur Verbindung jeweils eines der weiteren Photodetektoren mit der Phasenmesseinrichtung verbunden. Ein solcher Aufbau ist bei Verwendung einer geringen Anzahl von Photodetektoren besonders vorteilhaft.

In einer alternativen Ausführungsform ist eine Phasenmesseinrichtung der Auswerteschaltung mit den Photodetektoren der Photodetektoranordnung über einen ersten und zweiten Multiplexer zur Verbindung eines ersten und zweiten der Photodetektoren der Photodetektoranordnung mit der Phasenmesseinrichtung verbunden. In diesem Fall kann eine Phasendifferenz nicht nur zwischen dem Referenzdetektor und einem beliebigen weiteren Photodetektor, sondern zwischen zwei beliebigen Photodetektoren der Photodetektoranordnung direkt gemessen werden.

In der Vorrichtung nach Anspruch 5, umfasst die Phasenmesseinrichtung einen mit den Photodetektoren der Photodetektoranordnung verbundenen Multiplexer, eine elektronische Steuereinrichtung zur Auswertung der Signale des Multiplexers und einen Taktgeber zur Vorgabe der Abtastfrequenz des Multiplexers. Ein solcher Aufbau ist bei Verwendung einer größeren Anzahl von Photodetektoren vorteilhaft, wobei als Multiplexer z.B. CCD-Arrays verwendet werden können.

In einer bevorzugten Ausführungsform sind die Photodetektoren als Photodioden ausgebildet und in einer Diodenzeile als Photodetektoranordnung angeordnet.

In einer weiteren bevorzugten Ausführungsform ist die abbildende dispergierende optische Einrichtung durch ein Gitter, ein Prisma oder ein Arrayed Waveguide Grating gebildet.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Es zeigen:

- Fig. 1: die erfindungsgemäße Vorrichtung zur Messung der chromatischen Dispersion einer optischen Übertragungsstrecke;
- Fig. 2: in zwei Teilbildern a, b eine erste und zweite Ausführungsform einer Auswerteschaltung mit einem Phasenmesser und einem bzw. zwei Multiplexern zur sequentiellen Messung von Teilspektren eines übertragenen optischen Signals;
- Fig. 3: eine dritte Ausführungsform der Auswerteschaltung zur parallelen Messung von Teilspektren;
- Fig 4: in drei Teilbildern a-c eine Darstellung eines stationären Spektrums des übertragenen optischen Signals in Abhängigkeit von der Wellenlänge bei keiner, geringer und hoher chromatischer Dispersion;
- Fig. 5: in drei Teilbildern a-c eine Darstellung eines Spektrums des übertragenen optischen Signals in Abhängigkeit von der Wellenlänge bei keiner, geringer und hoher chromatischer Dispersion zu einem ersten Zeitpunkt;
- Fig. 6: in drei Teilbildern a-c die Darstellung des Spektrums zu einem zweiten Zeitpunkt; und
- Fig. 7: in drei Teilbildern a-c die Darstellung des Spektrums zu einem dritten Zeitpunkt.

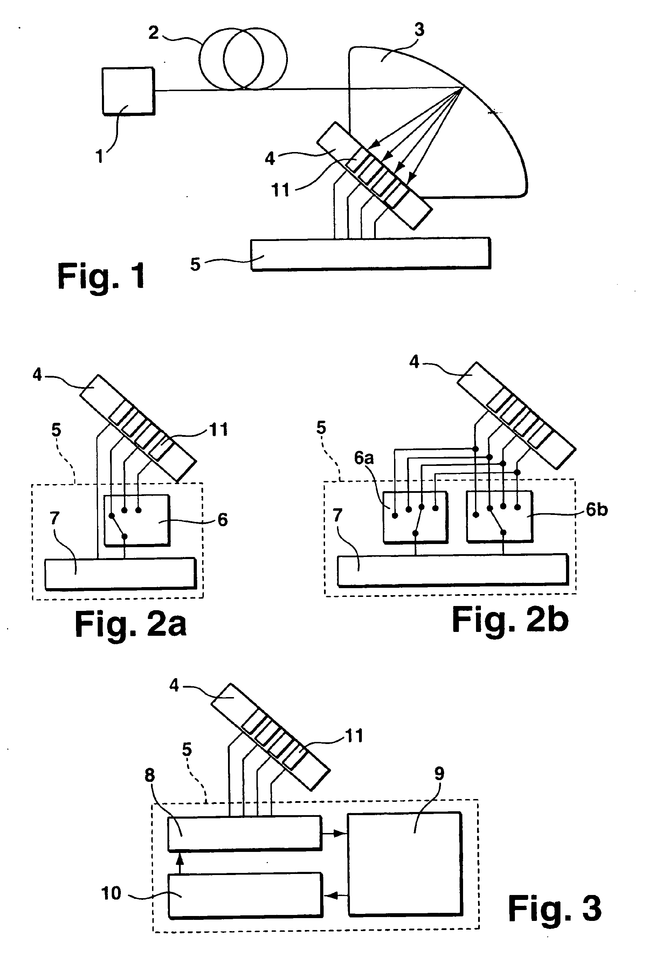

Die Fig. 1 zeigt schematisch die erfindungsgemäße Vorrichtung zur Messung der chromatischen Dispersion einer optischen Übertragungsstrecke. Eine Lichtquelle 1 sendet Licht mit einem breitbandigen optischen Spektrum aus, das in der Amplitude mit einer Modulationsfrequenz ω moduliert ist. Nach dem Durchlaufen des zu messenden Lichtwellenleiters 2 wird das Licht an einer abbildenden dispergierenden Einrichtung 3, die als Gitterspektrometer ausgebildet ist, in Teilspektren zerlegt, die von einer Photodetektoranordnung 4 detektiert werden, die als Diodenzeile ausgelegt ist. Die Photodetektoranordnung 4 ist fest mit einer elektronischen Auswerteschaltung 5 zur Auswertung der Phasenunterschiede zwischen den Teilspektren verbunden.

Die Phasenunterschiede können analog zum in der EP-A-1 233 256 beschriebenen Verfahren gemessen werden, wobei jeweils zwei Photodetektoren der Photodetektoranordnung 4 Eingangssignale für eine in Fig. 2a gezeigte Phasenmesseinrichtung 7 der Auswerteschaltung 5 zur Messung eines Phasenunterschiedes liefern. Ein als Referenzdetektor **11** dienender Photodetektor der Photodiodenzeile 4 ist permanent mit einem Eingang der Phasenmesseinrichtung 7 verbunden, während ein zweiter Eingang der Phasenmesseinrichtung 7 über einen Multiplexer 6 mit jeweils einem der weiteren Photodetektoren verbunden werden kann. Dem Durchstimmen der optischen Frequenz des zweiten Filters in der EP-A-1 233 256 entspricht das Durchschalten der weiteren Photodetektoren der Photodiodenzeile 4. Zur Berechnung der chromatischen Dispersion aus den Phasendifferenzen wird auf die Ausführungen dort verwiesen.

Alternativ kann die Auswerteeinrichtung 5 auch wie in Fig. 2b gezeigt ausgestaltet sein. Im Unterschied zur Fig. 2a sind hier zwei Multiplexer 6a, 6b mit den Photodetektoren der Photodetektoranordnung 4 und der Phasenmesseinrichtung 7 verbunden. Die Multiplexer 6a, 6b dienen zur Verbindung jeweils eines der Photodetektoren mit der Phasenmesseinrichtung 7. Hierdurch wird eine direkte Messung von Phasendifferenzen zwischen zwei beliebigen Photodetektoren der Photodetektoranordnung 4 ermöglicht.

Bei einer höheren Anzahl von Dioden der Photodetektoranordnung 4 wird bevorzugt eine Auswerteschaltung 5 verwendet, deren Aufbau im Detail in Fig. 3 gezeigt ist. Die Auswerteschaltung 5 umfasst einen Multiplexer 8 mit eingebauten Sample and Hold-Schaltkreisen, der fest mit allen Photodetektoren der Photodetektoranordnung 4 verbunden ist. Die Daten des Multiplexers 8 gelangen seriell über einen nicht bildlich dargestellten A/D-Wandler, der vorzugsweise Bestandteil des Multiplexers 8 ist, zu einer elektronischen Steuereinrichtung 9, welche einen Taktgenerator 10 ansteuert, der die Abtastfrequenz des Multiplexers 8 steuert.

Um die chromatische Dispersion zu bestimmen, kann die in Fig. 3 gezeigte Anordnung entweder mit einem synchronen oder einem asynchronen Verfahren betrieben werden, die im Folgenden beschrieben werden. Beiden Verfahren ist gemeinsam, dass zur Kalibrierung der Vorrichtung die optische Leistung der Photodetektoren der Photodetektoranordnung 4 zunächst mit einer im Verhältnis zur Periodendauer der Modulationsfrequenz der Amplitudenmodulation langen Mittelungsdauer gemessen wird. Dadurch wird für jeden Photodetektor der Mittelwert der detektierten optischen Leistung bestimmt. Alle weiteren Messungen werden auf diesen Mittelwert bezogen. Bei beiden Varianten des Verfahrens werden bei der eigentlichen Messung die Signale der Photodetektoren mit den Sample-and-Hold Schaltkreisen des Multiplexers 8 abgetastet.

Bei der synchronen Verfahrensvariante wird die Abtastfrequenz über die elektronische Steuereinheit 9 phasenstarr zum Modulationssignal eines der Photodetektoren synchronisiert. Dieser Photodetektor wird im Folgenden mit Referenzdetektor 11, die zugehörige Wellenlänge mit Referenzwellenlänge bezeichnet.

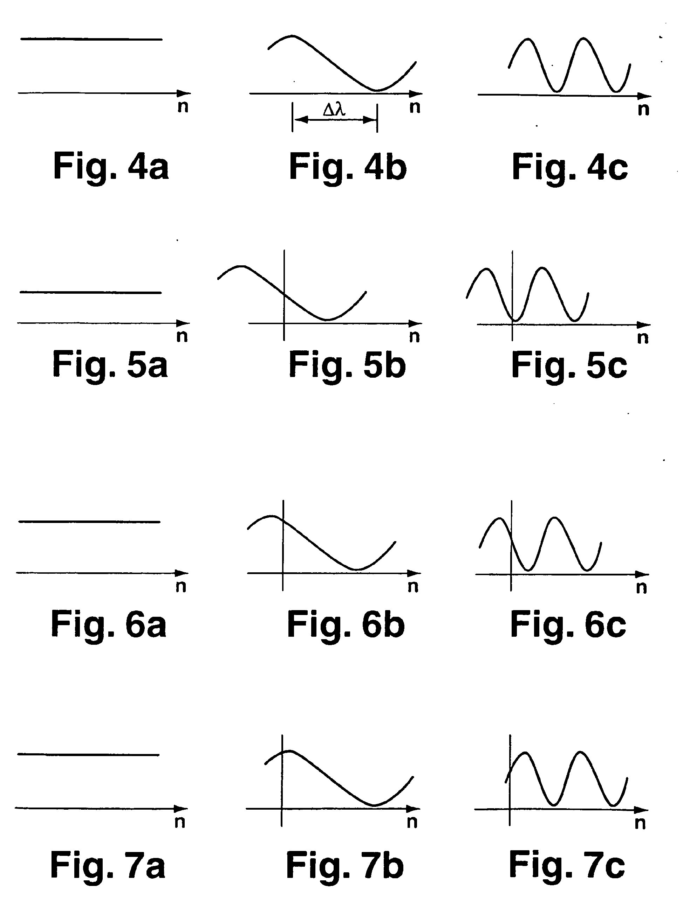

Tritt keine chromatische Dispersion auf, so sind alle Teilspektren in Phase. Nach Korrektur mit dem oben erwähnten Mittelwert erhält man ein detektiertes Signal, das für alle Photodetektoren gleich groß wie das Signal des Referenzdetektors 11 ist, und zwar unabhängig von der Nummer n des einzelnen Photodetektors beziehungsweise der zu dieser Nummer gehörigen Wellenlänge λₙ, wie in Fig. 4a dargestellt. Das detektierte Signal ist aufgrund der hohen Anzahl von Photodetektoren kontinuierlich dargestellt.

Bei einem Lichtwellenleiter mit chromatischer Dispersion kommt das Modulationssignal an den einzelnen Photodetektoren mit unterschiedlicher Phase an. Während es beim einem der Photodetektoren gerade in Phase mit der Abtastfrequenz ist, also maximales Signal liefert, ist es beim nächsten der Photodetektoren schon etwas verschoben und liefert ein kleineres Signal. Man erhält für eine lineare Phasenverschiebung über der Wellenlänge eine Sinuskurve über der Wellenlänge mit umso kleinerer Periodendauer (in nm), je größer die Dispersion ist. Analog zu Fig. 4a zeigt Fig. 4b die detektierte optische Leistung in Abhängigkeit von der Wellenlänge bei geringer, Fig. 4c bei hoher chromatischer Dispersion.

Bei der einfachsten Auswertung der synchronen Verfahrensvariante wird der Abstand Δλ zwischen einem Maximum und dem folgenden Minimum der optischen Leistung bestimmt. Aus dem bekannten zugehörigen Phasenunterschied ΔΦ=π wird in die Formel für die Gruppenlaufzeitverzerrung eingegangen: DGD= ΔΦ / w 1/Δλ.

Bei der synchronen Verfahrensvariante sind die in Fig. 4a-c gezeigten Signale zeitlich konstant, d.h. jedem der Photodetektoren ist ein konstanter Wert der optischen Leistung zugeordnet. In der asynchronen Verfahrensvariante ist die Abtastfrequenz gegenüber der Modulationsfrequenz ω um einen kleinen Betrag verschoben, sodass sich die Phase zwischen Abtastsignal und Modulationssignal langsam ändert. Da das Abtastsignal gegenüber dem Modulationssignal in der Phase zeitlich veränderlich ist, wandert auch das Maximum der optischen Leistung von einem der Photodetektoren zum nächsten. Je nach Phasenunterschied zwischen Abtastfrequenz und Modulationsfrequenz wird ein größeres oder kleineres Signal an den Photodetektoren entstehen. Tritt keine chromatische Dispersion auf, so sind alle Teilspektren in Phase. Nach Korrektur mit dem oben erwähnen Mittelwert erhält man wieder ein Signal, das für alle Photodetektoren gleich groß ist, unabhängig von der Nummer n des einzelnen Photodetektors beziehungsweise der zu dieser Nummer gehörigen Wellenlänge λₙ. Dieses Signal schwankt aber über der Zeit mit der Differenzfrequenz zwischen Abtast- und Modulationsfrequenz. In Fig. 5a ist ein konstanter Wert über der Nummer n Photodetektoren eingetragen. Für einen ersten nachfolgenden Zeitpunkt erhält man den in Fig. 6a gezeigten, identischen Wert, zu einem zweiten Zeitpunkt den in Fig. 7a gezeigten, ebenfalls identischen Wert, usw.

Bei einem Lichtwellenleiter mit chromatischer Dispersion kommt das Modulationssignal an den einzelnen Photodetektoren mit unterschiedlicher Phase an. Während es beim einen Photodetektor gerade in Phase mit dem Abtasttakt ist, also maximales Signal liefert, ist es beim nächsten Photodetektor schon etwas verschoben und liefert ein kleineres Signal. Anstelle des konstanten Werts erhält man nun die Kurve von Fig. 5b bei geringer und die Kurve von Fig. 5c bei hoher chromatischer Dispersion. Zu einem ersten späteren Zeitpunkt erhält man die Kurven von Fig. 6b und Fig. 6c und zu einem zweiten späteren Zeitpunkt die in Fig. 7b und Fig. 7c gezeigten Kurven. Zur Verdeutlichung der Verschiebung der Signale über die Zeit ist jeweils eine vertikale Linie bei einer feststehenden Detektornummer gezeigt.

Im einfachsten Fall bestimmt man zur Ermittlung der chromatischen Dispersion wie bei der synchronen Verfahrensvariante den Wellenlängen-Abstand △λ zwischen einem Maximum und einem Minimum. Dem entspricht eine Phasenverschiebung von △Φ=π an den zugehörigen Photodetektoren. Die Gruppenlaufzeitverzerrung berechnet sich daraus wie beim synchronen Fall zu DGD= ΔΦ/ω * 1/Δλ.

Mit einem aufwändigeren Algorithmus kann auch die Phasenverschiebung ΔΦ zwischen zwei Photodetektoren im Abstand Δλ bestimmt werden, z.B. aus dem zeitlichen Abstand des Auftretens der Maxima an den beiden Detektoren. Vorteil der asynchronen Verfahrensvariante ist, dass an jedem Photodetektor im Zeitverlauf ein Maximum und ein Minimum auftritt, so dass die Skala geeicht werden kann.

Die in Fign. 1 bis 3 gezeigten Vorrichtungen sind in miniaturisierter Baugröße als Handheld ausgeführt.

## Patentansprüche

1. Verfahren zum Messen der chromatischen Dispersion einer optischen Übertragungsstrecke, vorzugsweise eines Lichtwellenleiters (2), bei dem ein amplitudenmoduliertes optisches Signal in die zu messende optische Übertragungsstrecke eingespeist wird, das übertragene Signal an einer abbildenden dispergierenden optischen Einrichtung (3) in mehrere räumlich getrennte Teilspektren aufgespaltet wird, die jeweils von einem Photodetektor einer Photodetektoranordnung (4) detektiert werden, aus den detektierten Signalen in einer Auswerteschaltung (5) Phasendifferenzen bestimmt werden und daraus die chromatischen Dispersion der optischen Übertragungsstrecke ermittelt wird, **dadurch gekennzeichnet dass** die Signale der Photodetektoren der Photodetektoranordnung (4) mit einer vorgebbaren Abtastfrequenz unter Verwendung von Sample-And-Hold Schaltkreisen eines fest mit den Photodetektoren der Photodetektoranordnung (4) verbundenen Multiplexers (8) abgetastet werden und wobei die Abtastfrequenz von der Modulationsfrequenz des amplitudenmodulierten optischen Signals abhängt.

2. Verfahren nach Anspruch 1, **dadurch gekennzeichnet, dass** die Abtastfrequenz des Multiplexers (8) phasenstarr an die Modulationsfrequenz des detektierten Signals eines als Referenzdetektor (11) dienenden Photodetektors der Photodetektoranordnung (4) gekoppelt wird.

3. Verfahren nach Anspruch 1, **dadurch gekennzeichnet, dass** die Abtastfrequenz und die Modulationsfrequenz sich geringfügig unterscheiden.

4. Verfahren nach einem der vorhergehenden Ansprüche, **dadurch gekennzeichnet, dass** zur Kalibrierung die optische Leistung der detektierten Signale der Photodetektoren der Photodetektoranordnung (4) über eine im Verhältnis zur Periodendauer der Modulationsfrequenz lange Dauer gemessen und daraus ein Mittelwert der optischen Leistung ermittelt wird.

5. Vorrichtung zum Messen der chromatischen Dispersion einer optischen Übertragungsstrecke, vorzugsweise eines Lichtwellenleiters (2), insbesondere zur Durchführung des Verfahrens nach einem der vorhergehenden Ansprüche, mit:
einer amplitudenmodulierten breitbandigen Lichtquelle (1) eingangsseitig der zu messenden optischen Übertragungsstrecke,
einer abbildenden dispergierenden optischen Einrichtung (3) zum Aufspalten des übertragenen Signals in mehrere räumlich getrennte Teilspektren,
einer Mehrzahl von Photodetektoren in einer Photodetektoranordnung (4) zur Detektion jeweils eines der Teilspektren und
einer Auswerteschaltung (5) zum Ermitteln der zwischen den Teilspektren auftretenden Phasendifferenzen, aus denen die chromatische Dispersion der optischen Übertragungsstrecke bestimmt werden kann, **dadurch gekennzeichnet dass** die Auswerteschaltung (5) einen mit den Photodetektoren der Photodetektoranordnung (4) verbundenen Multiplexer (8), eine elektronische Steuereinrichtung (9) zur Auswertung der Signale des Multiplexers (8) und einen Taktgeber (10) zur Vorgabe der Abtastfrequenz des Multiplexers (8) in Abhängigkeit von der Modulationsfrequenz des amplitudenmodulierten Signals umfasst.

6. Vorrichtung nach Anspruch 5, **dadurch gekennzeichnet, dass** die Photodetektoren als Photodioden ausgebildet und in einer Diodenzeile als Photodetektoranordnung (4) angeordnet sind.

7. Vorrichtung nach einem der Ansprüche 5 oder 6, **dadurch gekennzeichnet, dass** die abbildende dispergierende optische Einrichtung (3) durch ein Gitter, ein Prisma oder ein Arrayed Waveguide Grating gebildet ist.

## Claims

1. Method for measuring the chromatic dispersion of an optical transmission line, preferably of an optical fiber (2), wherein an amplitude-modulated optical signal is fed into the optical transmission line to be measured, the transferred signal is split on an imaging dispersing optical means (3) into several spatially separated partial spectra which are each detected by a photo detector of a photo detector arrangement (4), wherein phase differences are determined from the detected signals in an evaluation circuit (5), from which the chromatic dispersion of the optical transmission line is determined, **characterized in that** the signals of the photo detectors of the photo detector arrangement (4) are scanned with a predeterminable scanning frequency using sample and hold circuits of a multiplexer (8), which is rigidly connected to the photo detectors of the photo detector arrangement (4), and wherein the scanning frequency depends on the modulation frequency of the amplitude-modulated optical signal.

2. Method according to claim 1, **characterized in that** the scanning frequency of the multiplexer (8) is coupled with locked phase to the modulation frequency of the detected signal of a photo detector of the photo detector arrangement (4), which serves as reference detector (11).

3. Method according to claim 1, **characterized in that** the scanning frequency and the modulation frequency slightly differ.

4. Method according to any one of the preceding claims, **characterized in that**, for calibration, the optical performance of the detected signals of the photo detectors of the photo detector arrangement (4) is measured for a long period compared to the period of the modulation frequency, and an average value of the optical performance is determined therefrom.

5. Device for measuring the chromatic dispersion of an optical transmission line, preferably of an optical fiber (2), in particular for performing the method according to any one of the preceding claims, comprising:
an amplitude-modulated broad-band light source (1) on the input side of the optical transmission line to be measured,
an imaging dispersing optical means (3) for splitting the transmitted signal into several spatially separated partial spectra,
a plurality of photo detectors in a photo detector configuration (4) each for detecting one of the partial spectra, and
an evaluation circuit (5) for determining the phase differences between the partial spectra, from which the chromatic dispersion of the optical transmission line can be determined, **characterized in that** the evaluation circuit (5) comprises a multiplexer (8) which is connected to the photo detectors of the photo detector arrangement (4), an electronic control means (9) for evaluating the signals of the multiplexer (8) and a pulse generator (10) for presetting the scanning frequency of the multiplexer (8) in dependence on the modulation frequency of the amplitude-modulated signal.

6. Device according to claim 5, **characterized in that** the photo detectors are designed as photo diodes and are disposed in a diode line as photo detector arrangement (4).

7. Device according to one of the claims 5 or 6, **characterized in that** the imaging dispersing optical means (3) is formed by a grating, a prism, or an arrayed waveguide grating.

## Revendications

1. Procédé de mesure de la dispersion chromatique d'une ligne de transmission optique, de préférence d'un guide d'ondes lumineuses (2), dans lequel un signal optique modulé en amplitude est injecté dans la ligne de transmission optique à mesurer, le signal transmis est divisé en plusieurs spectres partiels séparés spatialement sur un dispositif optique imageant dispersif (3), qui sont détectés chacun par un photodétecteur d'un arrangement de photodétecteurs (4), des différences de phase sont déterminées à partir des signaux détectés dans un circuit d'évaluation (5) et la dispersion chromatique de la ligne de transmission optique est déterminée à partir de celles-ci, **caractérisé en ce que** les signaux des photodétecteurs de l'arrangement de photodétecteurs (4) sont échantillonnés à une fréquence d'échantillonnage prescriptible en utilisant des circuits échantillonneurs-bloqueurs d'un multiplexeur (8) relié de manière fixe aux photodétecteurs de l'arrangement de photodétecteurs (4), la fréquence d'échantillonnage dépendant de la fréquence de modulation du signal optique modulé en amplitude.

2. Procédé selon la revendication 1, **caractérisé en ce que** la fréquence d'échantillonnage du multiplexeur (8) est couplée de manière verrouillée en phase à la fréquence de modulation du signal détecté d'un photodétecteur de l'arrangement de photodétecteurs (4) servant de détecteur de référence (11).

3. Procédé selon la revendication 1, **caractérisé en ce que** la fréquence d'échantillonnage et la fréquence de modulation diffèrent légèrement.

4. Procédé selon une des revendications précédentes, **caractérisé en ce que** pour l'étalonnage, la puissance optique des signaux détectés des photodétecteurs de l'arrangement de photodétecteurs (4) est mesurée sur une durée longue par rapport à la durée de période de la fréquence de modulation et qu'une moyenne de la puissance optique en est déduite.

5. Dispositif de mesure de la dispersion chromatique d'une ligne de transmission optique, de préférence d'un guide d'ondes lumineuses (2), en particulier pour réaliser le procédé selon une des revendications précédentes, avec :
une source de lumière (1) à large bande modulée en amplitude (1) du côté entrée de la ligne de transmission optique à mesurer,
un dispositif optique imageant dispersif (3) pour diviser le signal transmis en plusieurs spectres partiels séparés spatialement,
une pluralité de photodétecteurs dans un arrangement de photodétecteurs (4) pour détecter chaque fois un des spectres partiels et
un circuit d'évaluation (5) pour déterminer les différences de phase survenant entre les spectres partiels, à partir desquelles la dispersion chromatique de la ligne de transmission optique peut être déterminée, **caractérisé en ce que** le circuit d'évaluation (5) comprend un multiplexeur (8) relié aux photodétecteurs de l'arrangement de photodétecteurs (4), un dispositif de commande électronique (9) pour évaluer les signaux du multiplexeur (8) et un générateur d'horloge (10) pour prescrire la fréquence d'échantillonnage du multiplexeur (8) en fonction de la fréquence de modulation du signal modulé en amplitude.

6. Dispositif selon la revendication 5, **caractérisé en ce que** les photodétecteurs sont réalisés sous la forme de photodiodes et disposés dans une barrette de diodes en tant qu'arrangement de photodétecteurs (4).

7. Dispositif selon une des revendications 5 ou 6, **caractérisé en ce que** le dispositif optique imageant dispersif (3) est formé par un réseau, un prisme ou un arrayed waveguide grating (ou réseau de guide d'ondes).
